# EUROPÄISCHE PATENTANMELDUNG

(11) **EP 1 205 354 A2**
(43) Veröffentlichungstag der Anmeldung: **15.05.2002**
(21) Anmeldenummer: 01121976.3
(22) Anmeldetag: 13.09.2001
(51) Int. Cl.: B60R 1/07

(54) **Fahrzeug-Rückblickspiegel**

(30) Priorität: 08.11.2000 DE 10055320
(71) Anmelder: Bühler Motor GmbH, 90459 Nürnberg (DE)
(72) Erfinder: Seichter, Werner, 91166 Georgensgmünd (DE); Schieweck, Arno, 90571 Schwaig (DE); Stolpe, Thomas, 90542 Eckental (DE)

(57) **Zusammenfassung**

Die Erfindung betrifft einen Kraftfahrzeug-Rückblickspiegel, mit einem Antrieb zu dessen Verstellung, wobei der Antrieb zumindest einen Elektromotor und ein Untersetzungsgetriebe aufweist und einer Zuleitung für die Versorgung des Kraftfahrzeug-Rückblickspiegels mit einer elektrischen Bordspannung. Aufgabe der Erfindung ist es bei einem Kraftfahrzeug-Rückblickspiegel dafür zu sorgen, dass bei Einsatz einer Bordspannung von deutlich mehr als 12 Volt keine Änderung der Dimensionierung des Antriebs zur Verstellung des Spiegelglases vorgenommen werden muss wobei die Teileanzahl und der Herstellungsaufwand des Kraftfahrzeug-Rückblickspiegels hierdurch nicht oder nur unwesentlich erhöht wird. Diese Aufgabe wird erfindungsgemäß dadurch gelöst, dass bei einer Bordspannung von deutlich mehr als 12 Volt, mit dem Elektromotor ein Verbraucher (3) elektrisch in Reihe geschaltet ist, der eine Verringerung der Spannung am Elektromotor bewirkt und eine sinnvolle Zusatzfunktion erfüllt

## Beschreibung

Die Erfindung betrifft einen Kraftfahrzeug-Rückblickspiegel, mit einem Antrieb zum verstellen eines Spiegelglases, wobei der Antrieb zumindest einen Elektromotor und ein Untersetzungsgetriebe aufweist und einer Zuleitung für die Versorgung des Kraftfahrzeug-Rückblickspiegels mit einer elektrischen Bordspannung.

In Kraftfahrzeugen, insbesondere im Pkw-Bereich ist eine Bordspannung von 12 - 14 Volt etabliert. Daher sind die Verbraucher so ausgelegt und dimensioniert, dass sie mit dieser Spannung arbeiten können. Durch die zunehmende Anzahl der elektrischen Verbraucher durch immer höher werdende Ansprüche an Komfort und Sicherheit im Kraftfahrzeug, ist der Stromverbrauch stetig angestiegen. Im gleichen Zeitraum sind auch die Verbräuche der Verbrennungsmotoren durch Optimierung gesunken. Der Anteil des elektrischen Energieverbrauchs am Gesamtenergieverbrauch des Kraftfahrzeugs ist dadurch bereits relativ hoch. Um dem entgegen zu wirken ist vorgeschlagen worden die Bordspannung deutlich zu erhöhen, dies hat eine Verringerung der ohm'schen Verluste in der Bordelektrik zur Folge. Manche Verbraucher, wie z.B. Elektromotoren zur Verstellung eines Spiegelglases, sind jedoch für die höhere Spannung nicht verwendbar, weil die Wicklungsdrähte der verwendeten Elektromotoren bereits so dünn sind, dass bei einer weiteren Verringerung der Drahtdicke keine prozesssichere Verarbeitung mehr möglich wäre. Die Verwendung leistungsstärkerer Elektromotoren oder die Verwendung einer Sternschaltung anstatt einer Dreieckschaltung ist aus wirtschaftlichen Gründen nicht sinnvoll.

Aufgabe der Erfindung ist es daher bei einem Kraftfahrzeug-Rückblickspiegel dafür zu sorgen, dass bei Einsatz einer Bordspannung von deutlich mehr als 12 Volt keine Änderung der Dimensionierung des Antriebs zum verstellen des Spiegelglases vorgenommen werden muss wobei die Teileanzahl und der Herstellungsaufwand des Kraftfahrzeug-Rückblickspiegels hierdurch nicht oder nur unwesentlich erhöht wird.

Diese Aufgabe wird erfindungsgemäß dadurch gelöst, dass bei einer Bordspannung von deutlich mehr als 12 Volt, zwischen der Zuleitung und dem Elektromotor ein Verbraucher in Reihe geschaltet ist, der eine Verringerung der Spannung am Elektromotor bewirkt und eine 'sinnvolle Zusatzfunktion erfüllt. Der Verbraucher bewirkt einen Spannungsabfall, der die erhöhte Bordspannung auf einen von den Elektromotoren tolerierten Betrag reduziert. Um die Teileanzahl und den Herstellungsaufwand möglichst gering zu halten wird, ein Verbraucher verwendet, der entweder bereits vorhanden ist oder eine neue gewünschte Zusatzfunktion erfüllt.

Weiterbildungen der Erfindung werden in den Unteransprüchen dargestellt. Es ist vorgesehen den Verbraucher so auszulegen, dass die Elektromotoren auch bei einer Bordspannung von 42 Volt betreibbar sind. Diese Spannung wird voraussichtlich bei künftigen Kraftfahrzeugen verwendet.

Eine besonders wirtschaftliche Lösung ist durch die Verwendung eines ggf. vorhandenen Elektromagneten als Verbraucher und Vorwiderstand gegeben. Zusätzliche Teile werden hierbei nicht benötigt.

Ein Ausführungsbeispiel wird nachfolgend anhand der Zeichnung näher erläutert.

Es zeigt:

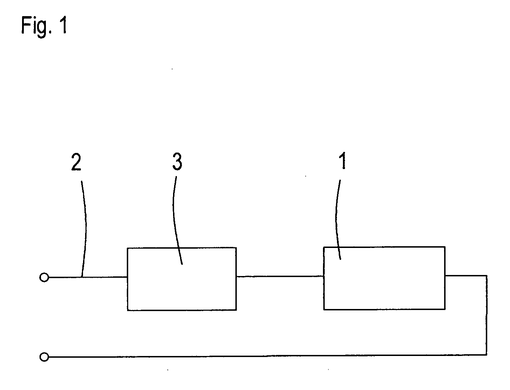

Fig. 1 ein Blockschaltbild eines Antriebs 1 in einer Zuleitung 2 in Reihe mit einem Verbraucher 3 als Vorwiderstand. Der Verbraucher ist vorzugsweise ein Elektromagnet.

## Patentansprüche

1. Kraftfahrzeug-Rückblickspiegel, mit einem Antrieb (1) zu dessen Verstellung, wobei der Antrieb (1) zumindest einen Elektromotor und ein Untersetzungsgetriebe aufweist und einer Zuleitung (2) für die Versorgung des Kraftfahrzeug-Rückblickspiegels mit einer elektrischen Bordspannung, **dadurch gekennzeichnet, dass** bei einer Bordspannung von deutlich mehr als 12 Volt, mit dem Elektromotor ein Verbraucher (3) elektrisch in Reihe geschaltet ist, der eine Verringerung der Spannung am Elektromotor bewirkt und eine sinnvolle Zusatzfunktion erfüllt.

2. Kraftfahrzeug-Rückblickspiegel nach Anspruch 1, **dadurch gekennzeichnet, dass** die Bordspannung 42 Volt beträgt.

3. Kraftfahrzeug-Rückblickspiegel nach Anspruch 1 oder 2, **dadurch gekennzeichnet, dass** der Verbraucher ein Elektromagnet ist.

4. Kraftfahrzeug-Rückblickspiegel nach Anspruch 1 oder 2, **dadurch gekennzeichnet, dass** der Antrieb ein Abklappantrieb und/oder ein Spiegelglasantrieb ist.
